# EUROPEAN PATENT SPECIFICATION

(11) **EP 3 254 779 B1**
(45) Date of publication and mention of the grant of the patent: **30.03.2022**
(21) Application number: 16746561.6
(22) Date of filing: 01.02.2016
(51) Int. Cl.: B21D 28/16, B21D 28/00, B21D 28/02, B23D 15/06, B23D 33/02, B23D 33/08, B21D 43/28

(54) **CUTTING AND MACHINING DEVICE AND CUTTING AND MACHINING METHOD**
SCHNEIDE- UND BEARBEITUNGSVORRICHTUNG SOWIE SCHNEIDE- UND BEARBEITUNGSVERFAHREN
DISPOSITIF DE COUPE ET D'USINAGE ET PROCÉDÉ DE COUPE ET D'USINAGE

(30) Priority: 04.02.2015 JP 2015020331
(43) Date of publication of application: 13.12.2017
(73) Proprietor: Nippon Steel Corporation, Tokyo (JP)
(72) Inventor: NISHIMURA Ryuichi, Tokyo 100-8071 (JP); ITO Yasuhiro, Tokyo 100-8071 (JP); NAKAZAWA Yoshiaki, Tokyo 100-8071 (JP)
(74) Representative: Vossius & Partner Patentanwälte Rechtsanwälte mbB
(86) International application number: PCT/JP2016/052888
(87) International publication number: WO 2016/125730

(56) References cited:
- FR-A1- 2 989 605
- JP-A- H01 293 922
- JP-A- H10 263 721
- JP-A- H11 221 628
- US-B1- 7 430 951

## Description

### [Technical Field of the Invention]

The present invention relates to a cutting device and a cutting method.

### [Related Art]

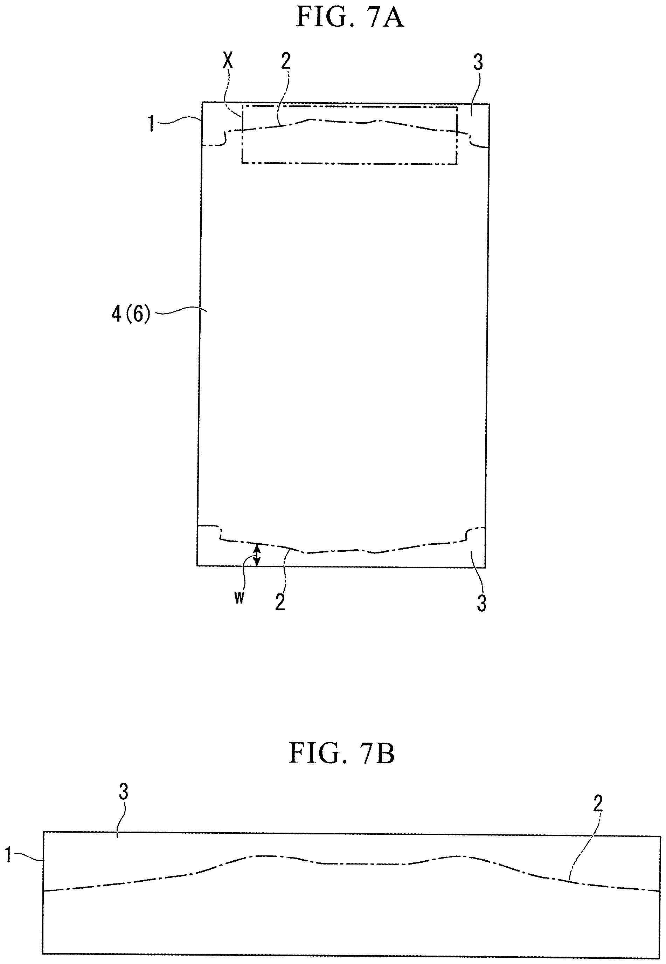

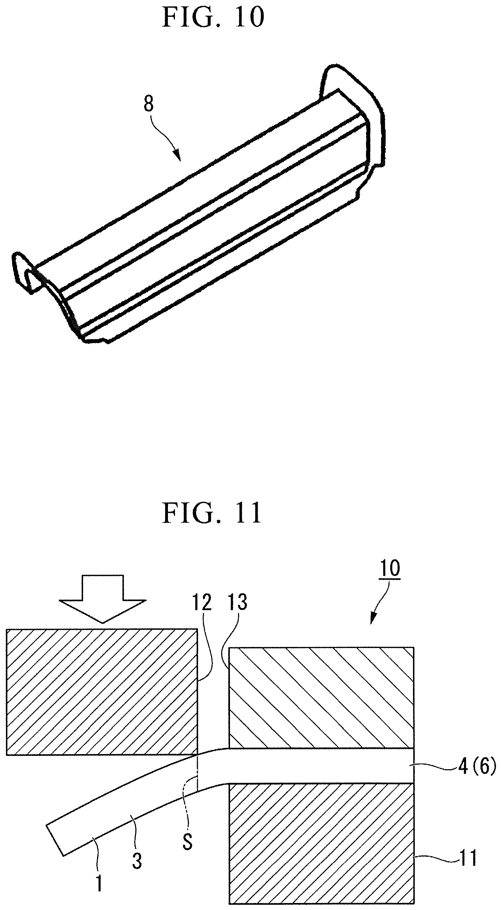

For example, a thin-plate processed part 8 (a press-formed product) shown in FIG. 10 is used for automobiles, railway vehicles, building materials, ships, home appliances, and the like. The thin-plate processed part 8 is manufactured through, for example, a cutting step of cutting (shearing) an end portion 3 in a longitudinal direction of a plate material 1 shown in FIGS. 7A and 7B along a curved cutting line 2, and a pressing step of press forming the plate material 1 after the cutting step (that is, a processed material portion 4 of the plate material 1). FIG. 7A is a plan view of the plate material 1, and FIG. 7B is an enlarged view of a portion indicated by symbol X of FIG. 7A.

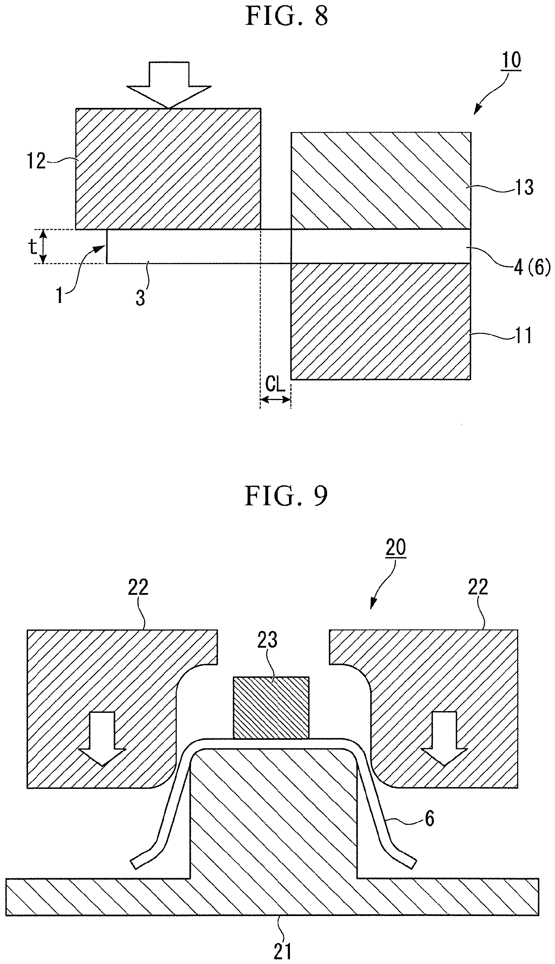

FIG. 8 is a sectional schematic diagram showing a cutting device 10 of the related art, which is used when cutting the plate material 1. As shown in FIG. 8, when cutting the end portion 3 of the plate material 1, an upper blade 12 having a predetermined clearance CL/t (%) with respect to a lower blade 11 is moved down while the plate material 1 is clamped by the lower blade 11 and a plate holder 13. In this way, the end portion 3 of the plate material 1 is cut off, and thus a processed material 6 is obtained from the plate material 1. As shown in FIG. 8, CL represents the distance between the upper blade 12 and the lower blade 11, and t represents the plate thickness of the plate material 1. That is, the "clearance CL/t (%)" represents the ratio of the distance CL to the plate thickness t.

FIG. 9 is a sectional schematic diagram showing a press forming device 20 which is used when press-forming the processed material 6. As shown in FIG. 9, the thin-plate processed part 8 shown in FIG. 10 can be obtained by performing stretch flanging on the processed material 6 by using a punch 21, a die 22, and a pad 23.

Here, in the cutting step shown in FIG. 8, when cutting off the end portion 3 from the plate material 1, there is a case where burrs are generated in the processed material portion 4 of the plate material 1. The burrs are hardened by strong processing, and therefore, the workability (formability) of the processed material 6 is lowered. Then, if the workability of the processed material 6 is lowered, a decrease in the yield and an increase in the manufacturing cost of the thin-plate processed part 8 occur. The burrs are remarkably generated as the clearance CL/t (%) is larger (for example, more than 10%), and therefore, it is important to control the clearance CL/t (%) to a predetermined value (less than or equal to 10%, for example) in order to increase the mass productivity of the thin-plate processed part 8.

However, from the viewpoint of manufacturing accuracy or the like of a die and punch, it is not easy to control the clearance CL/t between the upper blade 12 and the lower blade 11 to a predetermined value (less than or equal to 10%, for example) when cutting the plate material 1 along the curved cutting line 2. Further, even in a case where the plate material 1 is cut in a linear fashion, the clearance CL/t varies due to elastic deformation or the like of a die and punch, which occurs at the time of the cutting of the plate material 1. Therefore, it is not easy to control the clearance CL/t to a predetermined value and to suppress burr occurrence in a mass production process.

Here, Patent Document 1 discloses a punching die in which burrs generated during punching are crushed by rollers provided up and down. Further, Patent Document 2 discloses a method of preventing the generation of burrs in the cross section of a hole-formed portion by performing punch pressing at the same position and in the same shape from above and below a plate material.

However, in Patent Document 1, the burrs generated by the punching are crushed, and therefore, the crushed portion is hardened, so that the workability is further lowered. Further, in Patent Document 2, since punch pressing at the same position and in the same shape is performed from above and below the plate material, two press machines are required, and thus a cost such as the cost of equipment increases.

From US 7 430 951 B1 there is known a cutting device for obtaining a processed material by cutting off an end portion of a plate material by a cutting blade, the cutting device comprising a first contact part and a trim die which clamp a processed material portion to be the processed material, of the plate material, from front and back surfaces thereof and a drive part which causes the cutting blade to start relative approach to the trim die. From US 7 430 951 B 1 there is also known a cutting method for obtaining a processed material by cutting off an end portion of a plate material by a cutting device including a cutting blade and a trim die relatively approaching each other; a first contact part; the cutting method comprising clamping a processed material portion to be the processed material of the plate material, from front and back surfaces thereof by the first contact part and the trim die; causing the first cutting blade and the trim die to start relative approach each other.

### [Prior Art Document]

### [Patent Documents]

[Patent Document 1] Japanese Unexamined Patent Application, First Publication No. H10-263721
[Patent Document 2] Japanese Unexamined Patent Application, First Publication No. H11-221628

### [Disclosure of the Invention]

### [Problems to be Solved by the Invention]

The inventors of the present invention have focused on falling-down of the plate material 1 when cutting the plate material 1, as a factor of occurrence of the burrs in the processed material 6.

FIG. 11 is a schematic diagram showing a state where the upper blade 12 shown in FIG. 8 is moved down and is a diagram showing a state during cutting. As shown in FIG. 11, if the upper blade 12 is moved down in a state where the plate material 1 is clamped by the lower blade 11 and the plate holder 13, the upper blade 12 comes into contact with the surface of the plate material 1, and thus the end portion 3 of the plate material 1 falls down.

If such falling-down of the plate material 1 occurs, it is difficult for the lower blade 11 to bite into the plate material 1, and thus cracking from a place which is in contact with the lower blade 11 becomes difficult to occur. Further, due to the falling-down of the plate material 1, tension acts on the plate material 1, and thus cracking from the upper blade 12 becomes easy to occur. For this reason, if the upper blade 12 is further moved down from the state shown in FIG. 11, cracking occurs from a place which is in contact with the upper blade 12, and thus a cut surface S is formed in the moving direction of the upper blade 12, and as a result, burrs are generated. The above-mentioned falling-down is governed by the elastic deformation of the plate material 1, and therefore, the falling-down angle of the plate material 1 becomes large as the tensile strength of the plate material 1 increases. In other words, the larger the tensile strength of the plate material 1 is, the larger the burrs generated in the processed material 6 become.

The present invention has been made in view of the above circumstances and has an object to provide a cutting device and a cutting method, in which occurrence of burrs when cutting off an end portion of a plate material can be easily suppressed at low cost.

### [Means for Solving the Problem]

In order to solve the above problem, the present invention adopts the following.
(1) According to an aspect of the present invention, there is provided a cutting device as defined by claim 1.
(2) According to the invention, a curved portion is formed in each of the first cutting blade and the second cutting blade in a case of being viewed in a direction in which the first cutting blade and the second cutting blade approach each other.
(3) In the aspect according to the above (2), the curvature of the curved portion of the first cutting blade may be greater than or equal to -0.07 mm⁻¹ and less than or equal to 0.20 mm⁻¹.
(4) In the aspect according to any one of the above (1) to (3), a clearance between the first cutting blade and the second cutting blade may be more than 10% and less than or equal to 30%.
(5) In the aspect according to any one of the above (1) to (4), a pressurizing force of the second contact part with respect to the end material portion may be greater than or equal to 0.05 kN.
(6) According to the invention,
   the second contact part may include a flat portion which comes into contact with the end material portion of the plate material.
(7) In the aspect according to the above (6), a minimum width dimension of the flat portion may be greater than or equal to a plate thickness of the plate material.
(8) In the aspect according to the above (6) or (7), a maximum width dimension of the flat portion may be less than 0.5 times a minimum width dimension of the end portion of the plate material.
(9) In the aspect according to the above (6) or (7), a maximum width dimension of the flat portion may be less than or equal to 30 mm.
(10) In the aspect according to any one of the above (1) to (9), the cutting device may further include: an end member removal part which applies an external force to the end portion after cutting of the plate material and after release of clamping of the end portion by the second cutting blade and the second contact part.
(11) According to another aspect of the present invention, there is provided a cutting method as defined by claim 9.
(12) In the aspect according to the above (11), tension may not be applied to either of the front surface or the back surface of the plate material at the time of start of the approach.
(13) In the aspect according to the above (11) or (12), a clearance between the first cutting blade and the second cutting blade may be set to be more than 10% and less than or equal to 30%.
(14) In the aspect according to any one of the above (11) to (13), a pressurizing force when clamping the end material portion may be set to be greater than or equal to 0.05 kN.
(15) In the aspect according to any one of the above (11) to (14), the plate material may be a steel plate having tensile strength greater than or equal to 440 MPa.
(16) In the aspect according to any one of the above (11) to (15), a plate thickness of the plate material may be in a range of 0.6 mm to 3.6 mm.

### [Effects of the Invention]

According to each of the above aspects of the present invention, the occurrence of burrs when cutting off the end portion of the plate material can be easily suppressed at low cost.

### [Brief Description of the Drawings]

FIG. 1A is a perspective view showing a cutting device according to an embodiment of the present invention.
FIG. 1B is a plan view showing the cutting device.
FIG. 1C is a cross-sectional view taken along line A-A of the cutting device shown in FIG. 1A.
FIG. 2 is a cross-sectional view taken along line A-A of the cutting device shown in FIG. 1A and is a diagram showing a state after cutting.
FIG. 3 is cross-sectional photographs of a processed material obtained by the cutting device and a processed material obtained by a cutting device of the related art.
FIG. 4 is a graph showing a change in burr height according to the presence or absence of a falling-down prevention member.
FIG. 5 is a graph showing a relationship between a set load of the falling-down prevention member and a limit H/limit_reference.
FIG. 6 is a graph showing a relationship between a width of the falling-down prevention member and the limit H/limit_reference.
FIG. 7A is a plan view showing a plate material.
FIG. 7B is an enlarged view of a portion indicated by symbol X of FIG. 7A.
FIG. 8 is a sectional schematic diagram showing the cutting device of the related art.
FIG. 9 is a sectional schematic diagram showing a press forming device and is a diagram showing a state during forming.
FIG. 10 is a perspective view showing an example of a thin-plate processed part.
FIG. 11 is a diagram for explaining a mechanism of occurrence of burrs by the cutting device of the related art.

### [Embodiments of the Invention]

Hereinafter, an embodiment of the present invention will be described in detail with reference to the drawings. In this specification and the drawings, constituent elements having substantially the same functional configuration are denoted by the same reference numerals, and thus an overlapping description thereof is omitted.

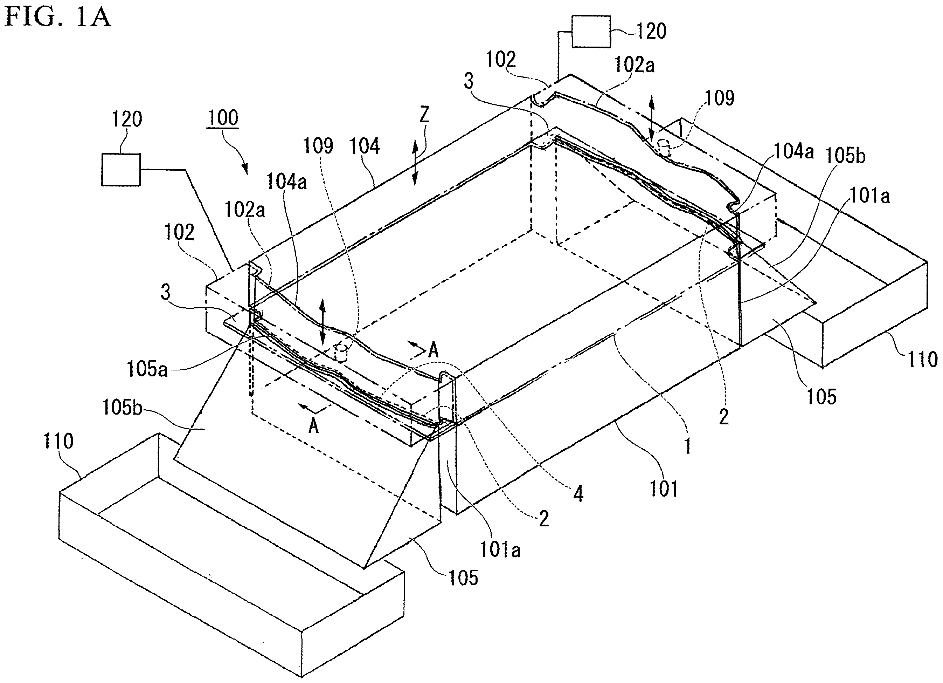

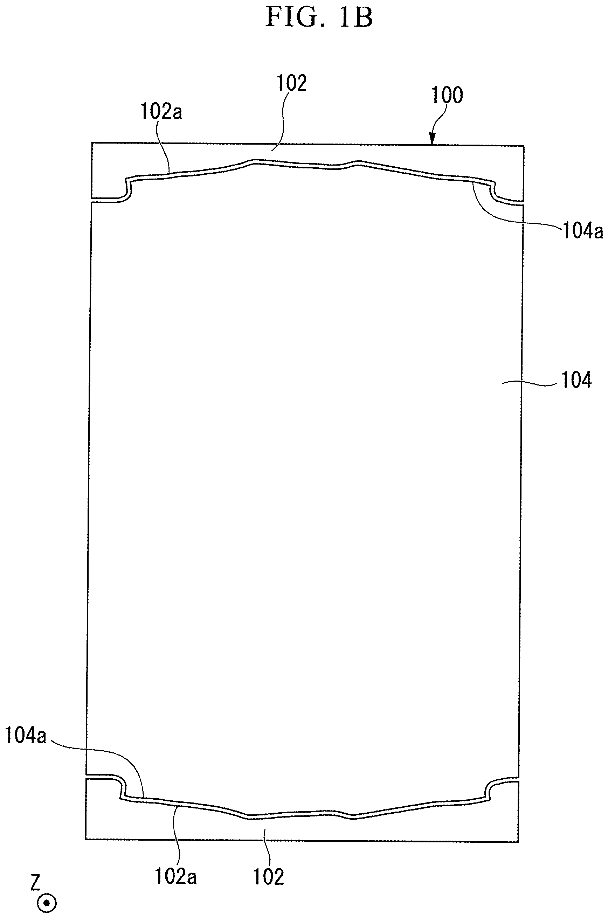

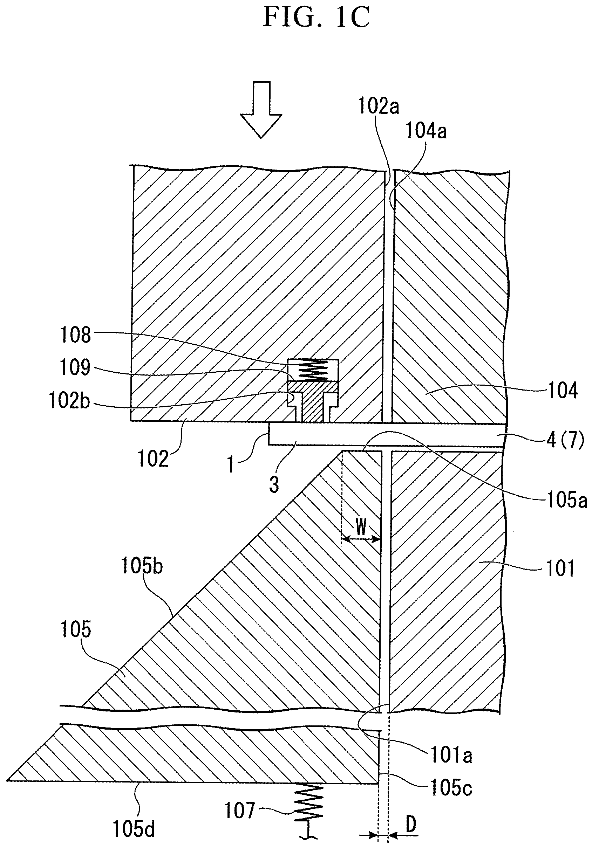

FIGS. 1A to 1C are diagrams showing a cutting device 100 according to an embodiment of the present invention. FIG. 1A is a perspective view of the cutting device 100, FIG. 1B is a plan view of the cutting device 100, and FIG. 1C is a cross-sectional view taken along line A-A of the cutting device 100 shown in FIG. 1A. The cutting device 100 cuts off an end portion 3 in a longitudinal direction of a plate material 1 (an end material portion of the plate material 1) along a curved cutting line 2 (performs outline trimming) by moving an upper blade 102 in a vertical direction Z (a direction in which the upper blade 102 approaches a lower blade 101), as shown in FIGS. 1A and 7A. In FIG. 1A, in order to make the drawing easier to be read, the upper blade 102 and the plate material 1 are indicated by two-dot chain lines.

A material of the plate material 1 is, for example, metal such as iron, aluminum, stainless steel, copper, titanium, magnesium, or steel. The material of the plate material 1 is not limited to only those listed above and may be a composite material composed of metal and resin, a dissimilar metal, or the like.

Further, a plate thickness of the plate material 1 is preferably in a range of 0.6 mm to 3.6 mm, more preferably in a range of 0.6 mm to 2.3 mm, and further preferably in a range of 0.6 mm to 1.8 mm.

As shown in FIGS. 1A to 1C, the cutting device 100 is provided with the lower blade 101 (a first cutting blade), a plate holder 104 (a first contact part) disposed so as to face the lower blade 101, a pair of upper blades 102 (second cutting blades) disposed to be separated from both end surfaces 104a in a longitudinal direction of the plate holder 104 by a predetermined distance, a pair of falling-down prevention members 105 (second contact parts) disposed so as to face the pair of upper blades 102, and a pair of scrap boxes 110.

The lower blade 101 is fixed to a floor surface (not shown). The plate holder 104 is made to be movable in the vertical direction Z. Then, when cutting the plate material 1, a processed material portion 4 of the plate material 1 is clamped by the lower blade 101 and the plate holder 104 from two surfaces (the front and back surfaces) in a through-thickness direction of the plate material 1.

The upper blade 102 is disposed to be separated from the lower blade 101 by a predetermined distance such that a clearance CL/t (a value obtained by dividing a distance CL between the upper blade 102 and the lower blade 101 by a plate thickness t of the plate material 1: refer to FIG. 8) is in a range of 5% to 30%, for example. That is, the distance between an end surface 102a (a curved portion) of the upper blade 102 and an end surface 101a (a curved portion) of the lower blade 101 is in a range of 5% to 30% of the plate thickness t of the plate material 1. Each of the pair of upper blades 102 is installed at a drive unit 120 (a drive part) and made to be movable in the vertical direction Z.

Further, as shown in FIG. 1C, each of the pair of upper blades 102 has a recess portion 102b provided in a lower end portion thereof, a pressing bar 109 (an end material removal part) provided inside of the recess portion 102b, and an elastic body 108 which biases the pressing bar 109 so as to push out it from the recess portion 102b. The elastic body 108 is, for example, a coil spring, a leaf spring, or the like. The biasing force of the elastic body 108 is set to a force to the extent that does not deform the plate material 1. The end portion 3 of the plate material 1 falls downward under an external force from the pressing bar 109 and the elastic body 108 after cutting.

The falling-down prevention member 105 has a trapezoidal cross section, as shown in FIG. 1C, and has a top plate surface 105a (a flat portion) which comes into contact with the lower surface of the end portion 3 of the plate material 1, a side end surface 105c connected to the top plate surface 105a and perpendicular to the top plate surface 105a, an inclined surface 105b connected to the top plate surface 105a and inclined with respect to the top plate surface 105a, a bottom surface 105d parallel to the top plate surface 105a, and an elastic body 107 provided on the bottom surface 105d. The elastic body 107 biases the falling-down prevention member 105 toward the upper blade 102. The elastic body 107 is, for example, a coil spring, a leaf spring, or the like. Instead of the elastic body 107, a gas cylinder or the like may be provided.

Further, the falling-down prevention member 105 is disposed such that a distance D between the side end surface 105c thereof and the end surface 101a of the lower blade 101 is in a range of 0.01 mm to 100 mm. The distance D is more preferably in a range of 0.01 mm to 50 mm and further preferably in a range of 0.01 mm to 10 mm.

When cutting the plate material 1, the end portion 3 in the longitudinal direction of the plate material 1 is clamped by the upper blade 102 and the falling-down prevention member 105 from two surfaces (the front and back surfaces) in the through-thickness direction of the plate material 1. At this time, the elastic body 107 is set so as to have a pressurizing force greater than or equal to 0.05 kN.

The pair of scrap boxes 110 is disposed below the falling-down prevention members 105, as shown in FIG. 1A. Then, the scrap boxes 110 accommodate the end portions 3 cut from the plate material 1.

Further, as shown in FIGS. 1A and 1B, each of the end surface 101a of the lower blade 101 and the end surface 104a of the plate holder 104 has a curved shape along the cutting line 2 of the plate material 1 shown in FIG. 7A in a case of being viewed in the vertical direction Z. Further, each of the end surface 102a of the upper blade 102 and the side end surface 105c of the falling-down prevention member 105 also has a curved shape along the cutting line 2 of the plate material 1 in a case of being viewed in the vertical direction Z. That is, the falling-down prevention member 105 has a shape along the end surface 102a of the upper blade 102.

A width W of the top plate surface 105a of the falling-down prevention member 105 (the length of the top plate surface 105a in a direction crossing the cutting line 2 of the plate material 1: refer to FIG. 1C) varies in the longitudinal direction of the top plate surface 105a, because the falling-down prevention member 105 has a curved shape. It is preferable that the maximum dimension of the width W of the top plate surface 105a is smaller than 0.5 times the minimum dimension of a cutting width w of the plate material 1 (that is, the width of the cut-off end portion 3 of the plate material 1: refer to FIG. 7A). In this way, the center of gravity of the cut end portion 3 of the plate material 1 is not located on the top plate surface 105a of the falling-down prevention member 105, and therefore, the end portion 3 of the plate material 1 can be dropped downward. The maximum dimension of the width W of the top plate surface 105a is less than or equal to 30 mm, for example.

On the other hand, it is preferable that the minimum dimension of the width W of the top plate surface 105a is greater than or equal to the plate thickness of the plate material 1. In this case, it is possible to increase the thickness of the falling-down prevention member 105, and thus it is possible to improve the strength of the falling-down prevention member 105.

Next, a method of obtaining a processed material 7 by cutting off the end portion 3 of the plate material 1 by using the cutting device 100 will be described. First, as shown in FIGS. 1A and 1C, the plate material 1 is disposed between the lower blade 101 and the plate holder 104, and the processed material portion 4 of the plate material 1 is clamped by the lower blade 101 and the plate holder 104. Thereafter, the end portion 3 of the plate material 1 is clamped by the upper blade 102 and the falling-down prevention member 105. At this time, the end portion 3 of the plate material 1 is pressurized due to the elastic body 107 provided at the falling-down prevention member 105.

Subsequently, the upper blade 102 is moved down (the upper blade 102 is brought close to the lower blade 101), and thus the end portion 3 of the plate material 1 is cut. At this time, since the falling-down prevention member 105 is pressing the end portion 3 of the plate material 1, the falling-down (refer to FIG. 11) of the end portion 3 of the plate material 1 can be prevented. For this reason, tension (tension in the direction crossing the cutting line 2 of the plate material 1) is prevented from acting on the plate material 1, and the lower blade 101 easily bites into the plate material 1. As a result, cracking can occur from the upper blade 102 and cracking can also occur from the lower blade 101. Therefore, burrs can be prevented from being generated in the processed material 7.

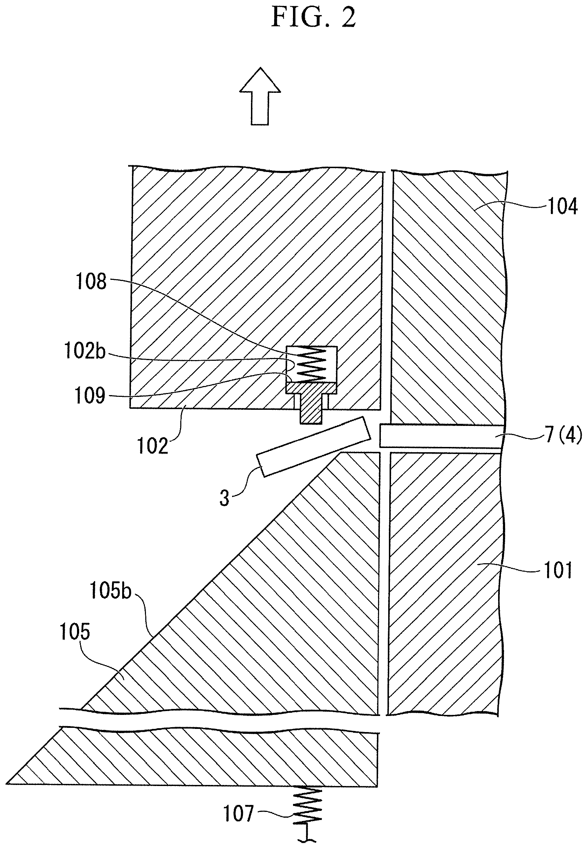

Finally, as shown in FIG. 2, the upper blade 102 is moved up, and thus the cutting of the plate material 1 is ended. At this time, the upper blade 102 moves up, whereby the clamping of the end portion 3 of the plate material 1 after cutting is released, and therefore, the end portion 3 falls under the external force by the pressing bar 109 of the upper blade 102. For this reason, the end portion 3 of the plate material 1 after cutting can be reliably dropped, and therefore, the efficiency of the cutting work can be improved. Then, the scrap box 110 is provided below the falling-down prevention member 105 (refer to FIG. 1A), and therefore, the end portion 3 is guided by the inclined surface 105b of the falling-down prevention member 105 and accommodated in the scrap box 110.

Through the above steps, it is possible to obtain the processed material 7 from the plate material 1 by using the cutting device 100. Then, stretch flanging is performed on the processed material 7 by using a press forming device 20 shown in FIG. 9, whereby it is possible to manufacture a press-formed product having a stretch flanged part. At this time, occurrence of burrs is suppressed in the processed material 7, and therefore, it is possible to suppress occurrence of forming defects at the time of the stretch flanging. As a result, it is possible to suppress a decrease in the yield and an increase in the manufacturing cost of the press-formed product, and thus it is possible to mass-produce the press-formed product with high yield.

According to the cutting device 100 according to the embodiment described above, the upper blade 102 starts to approach the lower blade 101 while the lower surface of the end portion 3 of the plate material 1 is pressurized by the falling-down prevention member 105. In other words, the upper blade 102 starts to approach the lower blade 101 while maintaining a flat state where the processed material portion 4 and the end portion 3 of the plate material 1 are on the same plane (without applying tension to two surfaces in the through-thickness direction of the plate material 1). For this reason, it is possible to prevent the end portion 3 of the plate material 1 from falling-down, and thus it is possible to suppress the occurrence of burrs in the processed material 7. Therefore, the occurrence of burrs can be easily suppressed at a low cost.

As described above, in the cutting device 10 of the related art (refer to FIG. 11), in a case where the clearance CL/t is large (more than 10%, for example), burrs are conspicuously generated due to the falling-down of the plate material. However, in the cutting device 100 according to the embodiment, it is possible to prevent the plate material from falling-down, and therefore, the occurrence of burrs in the processed material 7 can be suppressed even in a case where the clearance CL/t is large.

Further, the higher the tensile strength of the plate material 1 is, the more easily the falling-down occurs. Therefore, from the viewpoint of the effect of falling-down prevention, the plate material 1 is preferably a steel plate having tensile strength greater than or equal to 440 MPa, more preferably a steel plate having tensile strength greater than or equal to 590 MPa, and further preferably a steel plate having tensile strength greater than or equal to 980 MPa.

Further, the thinner the plate thickness of the plate material 1 is, the more easily the falling-down occurs. Therefore, the thinner the plate thickness of the plate material 1 is, the greater the effect of falling-down prevention becomes.

Further, in the plate material 1, in a case where the curvature of the cutting line 2 of the plate material 1 is greater than or equal to -0.07 mm⁻¹, the falling-down at the time of cutting occurs conspicuously. For this reason, in a case where the curvature of the cutting line 2 is greater than or equal to -0.07 mm⁻¹, the effect of falling-down prevention increases. Here, the negative curvature represents a concave curve, and the positive curvature represents a convex curve.

On the other hand, in a case where the curvature of the cutting line 2 of the plate material 1 exceeds 0.20 mm⁻¹, when the stretch flanging is performed on the processed material 7 by using the press forming device 20 shown in FIG. 9, stress concentration occurs in the processed material 7, whereby breakage sometimes occurs. For this reason, from the viewpoint of suppressing breakage at the time of the stretch flanging, it is preferable that the curvature of the cutting line 2 of the plate material 1 is less than or equal to 0.20 mm⁻¹.

Therefore, it is preferable that the curvature of the cutting line 2 of the plate material 1 is greater than or equal to -0.07 mm⁻¹ and less than or equal to 0.20 mm⁻¹.

In other words, since the plate material 1 is cut along the shapes of the lower blade 101 and the upper blade 102, it is preferable that the curvature of the end surface 101a of the lower blade 101 is greater than or equal to -0.07 mm⁻¹ and less than or equal to 0.20 mm⁻¹ and it is preferable that the curvature of the end surface 102a of the upper blade 102 is greater than or equal to -0.20 mm⁻¹ and less than or equal to 0.07 mm⁻¹.

### [Examples]

Next, examples performed in order to confirm the operation and effects of the present invention will be described.

### (Example 1)

A processed material was manufactured by cutting off the end portion 3 of the plate material 1 by using the cutting device 100 according to the embodiment. At this time, the curvature (a reciprocal of a radius of curvature) of the cutting line 2 of the plate material 1 was set to five levels of Conditions 1 to 5 in Table 1 below (Condition 3 shows a case where the cutting line 2 is linear). In Conditions 1 to 3 and 5 in Table 1, the width W of the top plate surface 105a of the falling-down prevention member 105 was set to 3 mm and the clearance CL/t was set to 25%. On the other hand, in Condition 4 in Table 1, the width W of the top plate surface 105a was set to 3 mm and the clearance CL/t was set to two levels of 10% and 25%. As the plate material 1, a steel plate having tensile strength of 980 MPa and a plate thickness of 1.4 mm was used. The set load (a pressurizing force to the plate material 1) of the falling-down prevention member 105 was set to 5.0 kN.

Further, for comparison, a processed material was likewise manufactured using the cutting device 10 of the related art shown in FIG. 8.

**[Table 1]**

| | Curvature [1/mm) | Radius of curvature [mm] |
|---|---|---|
| Condition 1 | -0.09 | -11.1 |
| Condition 2 | -0.07 | -14.3 |
| Condition 3 | 0 | ∞ |
| Condition 4 | 0.20 | 5.0 |
| Condition 5 | 0.30 | 3.3 |

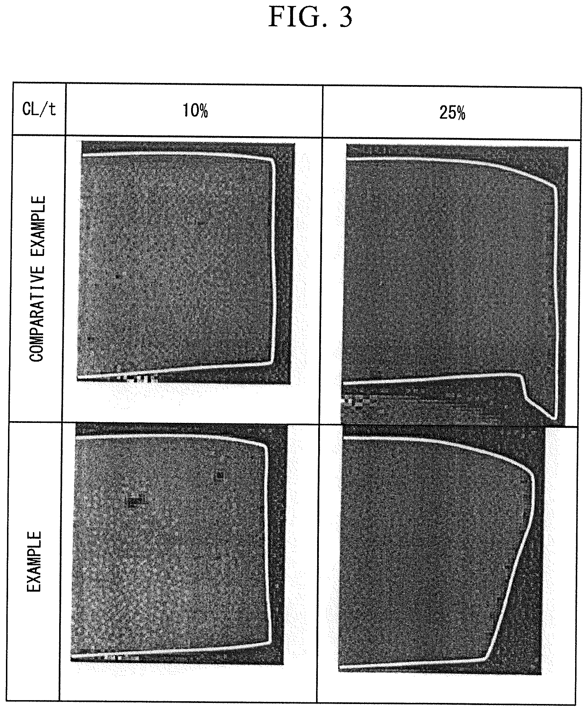

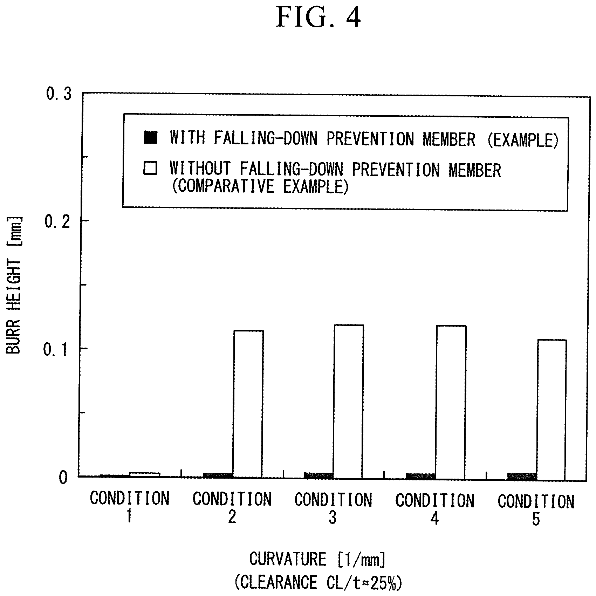

Then, with respect to these processed materials, the cross section perpendicular to the width direction was photographed and the burr height was measured. The results are shown in FIGS. 3 and 4.

As shown in FIG. 3, in a comparative example, in a case where the clearance CL/t is 25%, a large burr occurred, compared to a case where the clearance CL/t is 10%. On the other hand, in an example, even in a case where the clearance CL/t is 25%, a large burr did not occur. That is, in the example, even in a case where the clearance CL/t is large, it could be confirmed that burr occurrence could be suppressed.

Further, also from the results shown in FIG. 4, it could be confirmed that in the example, burr occurrence in the processed material could be suppressed. However, in Condition 1, since the burr height due to the falling-down of the plate material is small, it was found that the effect of falling-down prevention was smaller than in Conditions 2 to 5.

### (Example 2)

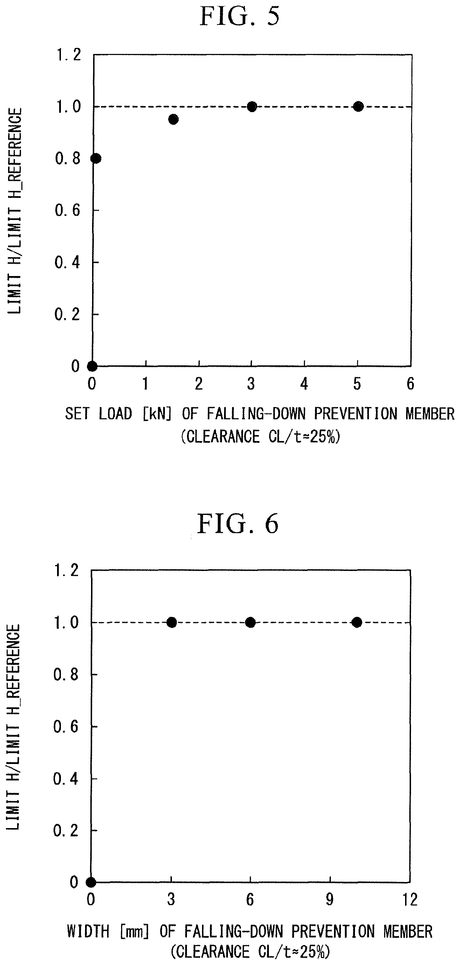

Similar to the case of Example 1, a processed material was manufactured with the curvature of the cutting line 2 of the plate material 1 set to that in Condition 4 in Table 1. The clearance CL/t was set to 25%, and the set load of the falling-down prevention member 105 was set to four levels of 0.05 kN, 1.5 kN, 3.0 kN, and 5.0 kN. Then, the stretch flanging was performed on these processed materials, and the relative value (limit H/limit H _reference) of a limit flange height was determined. The results are shown in FIG. 5.

FIG. 5 is a graph showing the relationship between the set load of the falling-down prevention member 105 and the relative value (limit H/limit_reference) of the limit flange height. In FIG. 5, a plot in which the set load of the falling-down prevention member is zero shows a case where the processed material manufactured using the cutting device 10 of the related art is subjected to the stretch flanging.

The relative value (limit H/limit_reference) of the limit flange height is a value obtained by dividing the limit flange height (limit H) in which a flange height is increased at a pitch of about 1 mm and cracking of an edge portion or local necking in the through-thickness direction does not occur, by the limit flange height (limit H_reference) of a processed material obtained under the condition of clearance CL/t=10% by using the cutting device 10 of the related art.

Here, the "flange height" is the flange height of the portion excluding a rising curvature portion at a root of a formed flange. Therefore, in a case where a flange having the same height as the processed material obtained under the condition of clearance CL/t=10% can be formed, the relative value (limit H/limit H_reference) of the limit flange height is 1.0, and in a case where only a flange height to the extent that it does not come out from the rising curvature portion can be formed, the relative value of the limit flange height is zero.

A large burr was generated in the processed material manufactured by the cutting device 10 of the related art. For this reason, as shown in FIG. 5, breakage occurred when this processed material was subjected to the stretch flanging, and the relative value of the limit flange height became zero.

On the other hand, in a case where the set load of the falling-down prevention member was set to be greater than or equal to 0.05 kN, the relative value of the limit flange height was more than 0.9 without occurrence of a large burr. From this result, it could be confirmed that in the cutting device 100, a processed material having good stretch flangeability could be manufactured even in a case where the clearance CL/t is as large as 25%.

### (Example 3)

Similar to the case of Example 2, a processed material was manufactured with the curvature of the cutting line 2 of the plate material 1 set to that in Condition 4 in Table 1. The set load of the falling-down prevention member 105 was set to 5.0 kN and the width W of the top plate surface 105a of the falling-down prevention member 105 was set to three levels of 3 mm, 6 mm, and 10 mm. Then, similar to the case of Example 2, the relative value (limit H/limit_reference) of the limit flange height was determined. The results are shown in FIG. 6.

FIG. 6 is a graph showing the relationship between the width W of the top plate surface 105a of the falling-down prevention member 105 and (limit H/limit_reference). In FIG. 6, a plot in which the width of the falling-down prevention member is zero shows a case where the processed material manufactured using the cutting device 10 of the related art is subjected to the stretch flanging.

As shown in FIG. 6, a large burr was generated in the processed material manufactured by the cutting device 10 of the related art. For this reason, breakage occurred when this processed material was subjected to the stretch flanging, and the relative value of the limit flange height became zero.

On the other hand, in the processed material manufactured by the cutting device 100 according to the embodiment, the relative value (limit H/limit_reference) of the limit flange height was about 1.0 without occurrence of a large burr. Also from this result, it could be confirmed that in the cutting device 100, a processed material having good stretch flangeability could be manufactured even in a case where the clearance CL/t is as large as 25%.

The embodiment of the present invention has been described above. However, the above-described embodiment has been presented as an example, and the scope of the present invention is not limited to only the above-described embodiment. The above-described embodiment can be implemented in various other modes, and various omissions, substitutions, and changes can be made within the scope of the invention, as defined by the claims.

For example, in the above-described embodiment, a case where the end portion 3 in the longitudinal direction of the plate material 1 is cut off is shown. However, the cutting device 100 may be configured so as to cut off an end portion in the width direction of the plate material 1. Further, the cutting device 100 may be configured so as to cut off an end portion in a circumferential direction of the plate material 1 (such that the cutting line 2 of the plate material 1 becomes one closed line).

Further, for example, in the above-described embodiment, a case where the upper blade 102 has the pressing bar 109 and the elastic body 108 is shown. However, the pressing bar 109 and the elastic body 108 may be provided in the falling-down prevention member 105. Further, instead of the pressing bar 109 and the elastic body 108, a gas blowing device for blowing gas to the end portion of the plate material may be provided.

Further, for example, in the above-described embodiment, a case where the cutting device 100 is provided with a pair of upper blades 102 is shown. However, the cutting device 100 may be provided with a single upper blade 102.

Further, for example, in the above-described embodiment, a case where the plate material 1 is cut in a curved line shape is shown. However, the plate material 1 may be cut in a linear fashion.

Further, for example, in the above-described embodiment, a case where the falling-down prevention member 105 has the inclined surface 105b is shown. However, the inclined surface 105b may be a vertical surface. However, from the viewpoint of securing a space for disposing the elastic body 107, the viewpoint of improving the strength of the falling-down prevention member 105, and the like, it is preferable that the inclined surface 105b is provided.

### [Industrial Applicability]

According to the present invention, it is possible to provide a cutting device and a cutting method, in which occurrence of burrs when cutting off an end portion of a plate material can be easily suppressed at low cost.

### [Brief Description of the Reference Symbols]

- 1:: plate material
- 2:: cutting line
- 3:: end portion of plate material
- 7:: processed material
- 20:: press forming device
- 100:: cutting device
- 101:: lower blade (first cutting blade)
- 102:: upper blade (second cutting blade)
- 104:: plate holder (first contact part)
- 105:: falling-down prevention member (second contact part)
- 107:: elastic body
- 110:: scrap box
- 120:: drive unit (drive part)

## Claims

1. A cutting device (100) for obtaining a processed material (7) by cutting off an end portion (3) of a plate material (1) by a first cutting blade (101) and a second cutting blade (102) which relatively approach each other, the cutting device (100) comprising:
a first contact part (104) and the first cutting blade (101) which clamp a processed material portion (4) to be the processed material (7), of the plate material (1), from front and back surfaces thereof;
the second cutting blade (102) and a second contact part (105) which clamp an end material portion to be the end portion (3), of the plate material (1), from front and back surfaces thereof; and
a drive part (120) which causes the first cutting blade (101) and the second cutting blade (102) to start relative approach each other while maintaining a flat state where the processed material portion (4) and the end material portion are on the same plane, on at least one of the front surface and the back surface of the plate material (1),
wherein a curved portion (101a, 102a) is formed in each of the first cutting blade (101) and the second cutting blade (102) in a case of being viewed in a direction in which the first cutting blade (101) and the second cutting blade (102) approach each other, and
the second contact part (105) includes: a flat portion (105a) which comes into contact with the end material portion of the plate material (1), and an inclined surface (105b) inclined with respect to the flat portion (105a).

2. The cutting device (100) according to claim 1, wherein curvature of the curved portion of the first cutting blade (101) is greater than or equal to -0.07 mm⁻¹ and less than or equal to 0.20 mm⁻¹.

3. The cutting device (100) according to claim 1 or 2, wherein a clearance between the first cutting blade (101) and the second cutting blade (102) is more than 10% and less than or equal to 30%.

4. The cutting device (100) according to any one of claims 1 to 3, wherein a pressurizing force of the second contact part (105) with respect to the end material portion is greater than or equal to 0.05 kN.

5. The cutting device (100) according to claim 1, wherein a minimum width dimension of the flat portion (105a) is greater than or equal to a plate thickness of the plate material (1).

6. The cutting device (100) according to claim 1 or 5, wherein a maximum width dimension of the flat portion (105a) is less than 0.5 times a minimum width dimension of the end portion (3) of the plate material (1).

7. The cutting device (100) according to claim 1 or 5, wherein a maximum width dimension of the flat portion (105a) is less than or equal to 30 mm.

8. The cutting device (100) according to any one of claims 1 to 7, further comprising:
an end member removal part which applies an external force to the end portion (3) after cutting of the plate material (1) and after release of clamping of the end portion (3) by the second cutting blade (102) and the second contact part (105).

9. A cutting method for obtaining a processed material (7) by cutting off an end portion (3) of a plate material (1) by a cutting device (100) including: a first cutting blade (101) and a second cutting blade (102) relatively approaching each other; a curved portion which is formed in each of the first cutting blade (101) and the second cutting blade (102) in a case of being viewed in a direction in which the first cutting blade (101) and the second cutting blade (102) approach each other; a first contact part (104); and a second contact part (105) having a flat portion (105a) and an inclined surface (105b) inclined with respect to the flat portion (105a), the cutting method comprising:
clamping a processed material portion (4) to be the processed material (7), of the plate material (1), from front and back surfaces thereof_by the first cutting blade (101) and the first contact part (104);
clamping an end material portion to be the end portion (3), of the plate material (1), from front and back surfaces thereof by the second cutting blade (102) and the flat portion (105a) of the second contact part (105); and
causing the first cutting blade (101) and the second cutting blade (102) to start relative approach each other while maintaining a flat state where the processed material portion (4) and the end material portion are on the same plane, on at least one of the front surface and the back surface of the plate material (1),
wherein the clamping of the end portion (3) of the plate material (1) after cutting is released, and then the end portion (3) is guided by the inclined surface (105b) of the second contact part (105) and accommodated in a scrap box.

10. The cutting method according to claim 9, wherein tension is not applied to either of the front surface or the back surface of the plate material (1) at the time of start of the approach.

11. The cutting method according to claim 9 or 10, wherein a clearance between the first cutting blade (101) and the second cutting blade (102) is set to be more than 10% and less than or equal to 30%.

12. The cutting method according to any one of claims 9 to 11, wherein a pressurizing force when clamping the end material portion is set to be greater than or equal to 0.05 kN.

13. The cutting method according to any one of claims 9 to 12, wherein the plate material (1) is a steel plate having tensile strength greater than or equal to 440 MPa.

14. The cutting method according to any one of claims 9 to 13, wherein a plate thickness of the plate material (1) is in a range of 0.6 mm to 3.6 mm.

## Patentansprüche

1. Schneidevorrichtung (100) zum Erhalten eines verarbeiteten Materials (7) durch Abschneiden eines Endabschnitts (3) eines Plattenmaterials (1) durch eine erste Schneideklinge (101) und eine zweite Schneideklinge (102), welche sich einander relativ annähern, wobei die Schneidevorrichtung (100) aufweist:
ein erstes Kontaktteil (104) und die erste Schneideklinge (101), welche einen verarbeiteten Materialabschnitt (4), aus welchem das verarbeitete Material (7) wird, des Plattenmaterials (1) von einer Vorder- und einer Rückfläche davon einspannen;
die zweite Schneideklinge (102) und ein zweites Kontaktteil (105), welche einen Endmaterialabschnitt, aus welchem der Endabschnitt (3) wird, des Plattenmaterials (1) von einer Vorder- und einer Rückfläche davon einspannen; und
ein Antriebsteil (120), welches die erste Schneideklinge (101) und die zweite Schneideklinge (102) veranlasst, eine relative Annäherung aneinander zu beginnen und gleichzeitig einen flachen Zustand, in dem der verarbeitete Materialabschnitt (4) und der Endmaterialabschnitt auf derselben Ebene liegen, auf der Vorderfläche und/oder der Rückfläche des Plattenmaterials (1) aufrechtzuerhalten,
wobei in einem Fall des Betrachtens in einer Richtung, in welcher sich die erste Schneideklinge (101) und die zweite Schneideklinge (102) einander annähern, ein gekrümmter Abschnitt (101a, 102a) in jeder der ersten Schneideklinge (101) und der zweiten Schneideklinge (102) ausgebildet wird, und
das zweite Kontaktteil (105) aufweist: einen flachen Abschnitt (105a), welcher mit dem Endmaterialabschnitt des Plattenmaterials (1) in Kontakt gelangt, und eine geneigte Fläche (105b), welche in Bezug auf den flachen Abschnitt (105a) geneigt ist.

2. Schneidevorrichtung (100) nach Anspruch 1, wobei eine Krümmung des gekrümmten Abschnitts der ersten Schneideklinge (101) größer als oder gleich -0,07 mm⁻¹ und kleiner als oder gleich 0,20 mm⁻¹ ist.

3. Schneidevorrichtung (100) nach Anspruch 1 oder 2, wobei ein Zwischenraum zwischen der ersten Schneideklinge (101) und der zweiten Schneideklinge (102) mehr als 10% und kleiner als oder gleich 30% ist.

4. Schneidevorrichtung (100) nach einem der Ansprüche 1 bis 3, wobei eine Druckkraft des zweiten Kontaktteils (105) in Bezug auf den Endmaterialabschnitt größer als oder gleich 0,05 kN ist.

5. Schneidevorrichtung (100) nach Anspruch 1, wobei eine minimale Breitenabmessung des flachen Abschnitts (105a) größer als oder gleich einer Plattendicke des Plattenmaterials (1) ist.

6. Schneidevorrichtung (100) nach Anspruch 1 oder 5, wobei eine maximale Breitenabmessung des flachen Abschnitts (105a) kleiner als das 0,5-Fache einer minimalen Breitenabmessung des Endabschnitts (3) des Plattenmaterials (1) ist.

7. Schneidevorrichtung (100) nach Anspruch 1 oder 5, wobei eine maximale Breitenabmessung des flachen Abschnitts (105a) kleiner als oder gleich 30 mm ist.

8. Schneidevorrichtung (100) nach einem der Ansprüche 1 bis 7, ferner aufweisend:
ein Endelemententfernungsteil, welches nach Schneiden des Plattenmaterials (1) und nach Aufheben eines Einspannens des Endabschnitts (3) durch die zweite Schneideklinge (102) und das zweite Kontaktteil (105) eine externe Kraft auf den Endabschnitt (3) aufbringt.

9. Schneideverfahren zum Erhalt eines verarbeiteten Materials (7) durch Abschneiden eines Endabschnitts (3) eines Plattenmaterials (1) durch eine Schneidevorrichtung (100), aufweisend: eine erste Schneideklinge (101) und eine zweite Schneideklinge (102), welche sich einander relativ annähern; einen gekrümmten Abschnitt, welcher in einem Fall des Betrachtens in einer Richtung, in welcher sich die erste Schneideklinge (101) und die zweite Schneideklinge (102) einander annähern, in jeder der ersten Schneideklinge (101) und der zweiten Schneideklinge (102) ausgebildet ist; ein erstes Kontaktteil (104); und ein zweites Kontaktteil (105) mit einem flachen Abschnitt (105a) und einer geneigten Fläche (105b), welche in Bezug auf den flachen Abschnitt (105a) geneigt ist, wobei das Schneideverfahren umfasst:
Einspannen eines verarbeiteten Materialabschnitts (4), aus welchem das verarbeitete Material (7) wird, des Plattenmaterials (1) von einer Vorder- und einer Rückfläche davon durch die erste Schneideklinge (101) und das erste Kontaktteil (104);
Einspannen eines Endmaterialabschnitts, aus welchem der Endabschnitt (3) wird, des Plattenmaterials (1) von einer Vorder- und einer Rückfläche davon durch die zweite Schneideklinge (102) und den flachen Abschnitt (105a) des zweiten Kontaktteils (105); und
Veranlassen der ersten Schneideklinge (101) und der zweiten Schneideklinge (102), eine relative Annäherung aneinander zu beginnen und gleichzeitig einen flachen Zustand, in dem der verarbeitete Materialabschnitt (4) und der Endmaterialabschnitt auf derselben Ebene liegen, auf der Vorderfläche und/oder der Rückfläche des Plattenmaterials (1) aufrechtzuerhalten,
wobei das Einspannen des Endabschnitts (3) des Plattenmaterials (1) nach Schneiden aufgehoben wird und dann der Endabschnitt (3) durch die geneigte Fläche (105b) des zweiten Kontaktteils (105) geführt und in einem Ausschusskasten aufgenommen wird.

10. Schneideverfahren nach Anspruch 9, wobei zu dem Zeitpunkt des Beginns der Annäherung Spannung weder auf die Vorderfläche noch auf die Rückfläche des Plattenmaterials (1) aufgebracht wird.

11. Schneideverfahren nach Anspruch 9 oder 10, wobei ein Zwischenraum zwischen der ersten Schneideklinge (101) und der zweiten Schneideklinge (102) als mehr als 10% und kleiner als oder gleich 30% festgelegt ist.

12. Schneideverfahren nach einem der Ansprüche 9 bis 11, wobei eine Druckkraft beim Einspannen des Endmaterialabschnitts als größer als oder gleich 0,05 kN festgelegt ist.

13. Schneideverfahren nach einem der Ansprüche 9 bis 12, wobei das Plattenmaterial (1) eine Stahlplatte mit einer Zugfestigkeit größer als oder gleich 440 MPa ist.

14. Schneideverfahren nach einem der Ansprüche 9 bis 13, wobei eine Plattendicke des Plattenmaterials (1) in einem Bereich von 0,6 mm bis 3,6 mm liegt.

## Revendications

1. Dispositif de coupe (100) pour obtenir un matériau traité (7) en coupant une portion d'extrémité (3) d'un matériau de plaque (1) par une première lame de coupe (101) et une seconde lame de coupe (102) qui s'approchent relativement l'une de l'autre, le dispositif de coupe (100) comprenant :
une première partie de contact (104) et la première lame de coupe (101) qui serrent une portion de matériau traité (4) destinée à être le matériau traité (7), du matériau de plaque (1), à partir de surfaces avant et arrière de celle-ci ;
la seconde lame de coupe (102) et une seconde partie de contact (105) qui serrent une portion de matériau d'extrémité destinée à être la portion d'extrémité (3), du matériau de plaque (1), à partir de surfaces avant et arrière de celle-ci ; et
une partie d'entraînement (120) qui fait que la première lame de coupe (101) et la seconde lame de coupe (102) commencent à s'approcher l'une de l'autre tout en maintenant un état plat où la portion de matériau traité (4) et la portion de matériau d'extrémité se trouvent sur le même plan, sur au moins une de la surface avant et la surface arrière du matériau de plaque (1),
où une portion courbée (101a, 102a) est formée dans chacune de la première lame de coupe (101) et la seconde lame de coupe (102) dans le cas où elle est vue dans une direction dans laquelle la première lame de coupe (101) et la seconde lame de coupe (102) s'approchent l'une de l'autre, et
la seconde partie de contact (105) inclut : une portion plane (105a) qui entre en contact avec la portion de matériau d'extrémité du matériau de plaque (1), et une surface inclinée (105b) inclinée par rapport à la portion plane (105a).

2. Dispositif de coupe (100) selon la revendication 1, où la courbure de la portion courbée de la première lame de coupe (101) est supérieure ou égale à -0,07 mm⁻¹ et inférieure ou égale à 0,20 mm⁻¹.

3. Dispositif de coupe (100) selon la revendication 1 ou 2, où un écartement entre la première lame de coupe (101) et la seconde lame de coupe (102) est supérieur à 10 % et inférieur ou égal à 30 %.

4. Dispositif de coupe (100) selon l'une quelconque des revendications 1 à 3, où une force de pressurisation de la seconde partie de contact (105) par rapport à la portion de matériau d'extrémité est supérieure ou égale à 0,05 kN.

5. Dispositif de coupe (100) selon la revendication 1, où une dimension de largeur minimale de la portion plane (105a) est supérieure ou égale à une épaisseur de plaque du matériau de plaque (1).

6. Dispositif de coupe (100) selon la revendication 1 ou 5, où une dimension de largeur maximale de la portion plane (105a) est inférieure à 0,5 fois une dimension de largeur minimale de la portion d'extrémité (3) du matériau de plaque (1).

7. Dispositif de coupe (100) selon la revendication 1 ou 5, où une dimension de largeur maximale de la portion plane (105a) est inférieure ou égale à 30 mm.

8. Dispositif de coupe (100) selon l'une quelconque des revendications 1 à 7, comprenant de plus :
une partie d'élimination d'élément d'extrémité qui applique une force externe à la portion d'extrémité (3) après coupe du matériau de plaque (1) et après libération de serrage de la portion d'extrémité (3) par la seconde lame de coupe (102) et la seconde partie de contact (105).

9. Procédé de coupe pour obtenir un matériau traité (7) par coupe d'une portion d'extrémité (3) d'un matériau de plaque (1) par un dispositif de coupe (100) incluant : une première lame de coupe (101) et une seconde lame de coupe (102) s'approchant relativement l'une de l'autre ; une portion courbée qui est formée dans chacune de la première lame de coupe (101) et la seconde lame de coupe (102) dans le cas où elle est vue dans une direction dans laquelle la première lame de coupe (101) et la seconde lame de coupe (102) s'approchent l'une de l'autre ; une première partie de contact (104) ; et une seconde partie de contact (105) ayant une portion plane (105a) et une surface inclinée (105b) inclinée par rapport à la portion plane (105a), le procédé de coupe consistant à :
serrer une portion de matériau traité (4) destinée à être le matériau traité (7), du matériau de plaque (1), à partir de surfaces avant et arrière de celle-ci par la première lame de coupe (101) et la première partie de contact (104) ;
serrer une portion de matériau d'extrémité destinée à être la portion d'extrémité (3), du matériau de plaque (1), à partir de surfaces avant et arrière de celle-ci par la seconde lame de coupe (102) et la portion plane (105a) de la seconde partie de contact (105) ; et
faire que la première lame de coupe (101) et la seconde lame de coupe (102) commencent à s'approchent relativement l'une de l'autre tout en maintenant un état plat où la portion de matériau traité (4) et la portion de matériau d'extrémité se trouvent sur le même plan, sur au moins une de la surface avant et la surface arrière du matériau de plaque (1),
où le serrage de la portion d'extrémité (3) du matériau de plaque (1) après la coupe est libéré, et la portion d'extrémité (3) est ensuite guidée par la surface inclinée (105b) de la seconde partie de contact (105) et logée dans un bac à déchets.

10. Procédé de coupe selon la revendication 9, où une tension n'est appliquée ni à la surface avant ni à la surface arrière du matériau de plaque (1) au moment du commencement de l'approche.

11. Procédé de coupe selon la revendication 9 ou 10, où un écartement entre la première lame de coupe (101) et la seconde lame de coupe (102) est fixé pour être supérieur à 10 % et inférieur ou égal à 30 %.

12. Procédé de coupe selon l'une quelconque des revendications 9 à 11, où une force de pressurisation lors du serrage de la portion de matériau d'extrémité est fixée pour être supérieure ou égale à 0,05 kN.

13. Procédé de coupe selon l'une quelconque des revendications 9 à 12, où le matériau de plaque (1) est une plaque en acier ayant une résistance à la traction supérieure ou égale à 440 MPa.

14. Procédé de coupe selon l'une quelconque des revendications 9 à 13, où une épaisseur de plaque du matériau de plaque (1) se trouve dans un intervalle de 0,6 mm à 3,6 mm.
